# EUROPÄISCHE PATENTSCHRIFT

(11) **EP 1 584 644 B1**
(45) Veröffentlichungstag und Bekanntmachung des Hinweises auf die Patenterteilung: **05.03.2008**
(21) Anmeldenummer: 05006691.9
(22) Anmeldetag: 26.03.2005
(51) Int. Cl.: C08J 3/20, C08K 5/01, C08L 91/06, C08L 23/02

(54) **Verwendung von Wachsen als Modifizierungsmittel für gefüllte Kunststoffe**
Use of waxes as modifying agent for filled plastics
Utilisation de cire comme agent de modification pour plastiques chargés

(30) Priorität: 06.04.2004 DE 102004016790
(43) Veröffentlichungstag der Anmeldung: 12.10.2005
(73) Patentinhaber: Clariant Produkte (Deutschland) GmbH, 65929 Frankfurt am Main (DE)
(72) Erfinder: Richter, Eric, Dr., 86672 Thierhaupten (DE); Hohner, Gerd, Dr., 86368 Gersthofen (DE)

(56) Entgegenhaltungen:
- EP-A- 1 072 645
- EP-A- 1 498 450
- DE-A1- 3 112 659
- US-A- 3 745 054
- US-A- 4 325 850
- PATENT ABSTRACTS OF JAPAN Bd. 007, Nr. 086 (C-161), 9. April 1983 (1983-04-09) & JP 58 015538 A (MITSUBISHI KASEI KOGYO KK), 28. Januar 1983 (1983-01-28)

## Beschreibung

Die Erfindung betrifft die Verwendung von Wachsen als Modifizierungsmittel für Füllstoffe enthaltende thermoplastische oder duroplastische Kunststoffe, die solche Wachse enthalten.

Unter Füllstoffen werden generell pulver- oder faserförmige Substanzen organischen oder anorganischen Ursprungs verstanden, welche in organischen Medien, Dispersionen oder Emulsionen dispergiert werden, um dem jeweiligen Endprodukt bestimmte Eigenschaften zu verleihen oder dessen Gestehungspreis zu senken. Bei den Füllstoffen müssen anorganische und organische Materialien unterschieden werden. Von besonderer Bedeutung sind Calciumcarbonat, Calcium-MagnesiumCarbonat, Aluminiumsilikate, Siliciumdioxid, Magnesiumsilikate (Talkum), Bariumsulfat, Aluminium-Kalium-Natrium-Silikate, Metalle und -oxide, Aluminiumhydoxide, Ruße und Graphit, Holz- und Korkmehl, Holzspäne, Holzfasern, Glasfasern und Naturfasern (H.P. Schlumpf, "Filler and Reinforcements" in R. Gächter, H. Müller, Plastic Additives, 3. Ausgabe, Carl Hanser Verlag München 1993, S.525 - 591).

Füllstoffe werden in einem breiten Anwendungsfeld eingesetzt. Insbesondere sind hier die Kunststoffanwendungen, Lacke, Beschichtungsmaterialien, Papier, Baustoffe und Klebstoffe zu nennen. Je nach Anwendung sind verschiedene Eigenschaften der Füllstoffe relevant. Typische Kenngrößen sind die Brechzahl, die Bindemittelaufnahme, die spezifische Oberfläche, das Deckvermögen, der Abrieb (Verschleiß der Verarbeitungsmaschinen), der Glanz, die Kornform und die Korngrößenverteilung. Insbesondere bei faserförmigen Füllstoffen ist die Verträglichkeit zwischen dem Füllstoff und der Matrix von besonderem Interesse. Zur Verbesserung dieser Anbindung zwischen den beiden Stoffen werden z.B. Glasfasern mit geeigneten Substanzen beschichtet.

Im Laufe der letzten Jahrzehnte stieg die Bedeutung der Füllstoffe in der Kunststoffverarbeitung stetig an. Während man früher im Füllstoffzusatz in erster Linie entweder eine Verbilligung des Endproduktes oder die mengenmäßige Erhöhung des Fertigartikels anstrebte, nutzte man in der Folgezeit den Einfluss der Füllstoffe auf die Verarbeitungseigenschaften bzw. die Eigenschaften der Fertigprodukte aus. Mit Hilfe von Füllstoffen konnten Eigenschaften wie die Verarbeitungsgeschwindigkeit, die Dimensionsstabilität, die Entflammbarkeit, die Abriebfestigkeit, die elektrische Durchschlagfestigkeit oder die mechanischen Eigenschaften optimiert werden. Im Bereich der Kunststoffverarbeitung werden Füllstoffe insbesondere in Polyvinylchlorid, Polyethylen, Polypropylen und auch Gummi (natürliche und synthetische unvernetzte und vernetzte, z.B. durch Vulkanisation, Elastomere) eingesetzt. Technischen Thermoplasten (Polycarbonat, Polymethylmethacrylat, Polyamid, Polystyrol, etc.) werden nur seltener Füllstoffe zugesetzt.

Für die unterschiedlichsten Anwendungen haben sich holzgefüllte thermoplastische Kunststoffe als Stand der Technik etabliert. Dabei werden Holzmehl, Holzfasern oder Holzspäne in hohen Konzentrationen eingearbeitet. Üblich sind hierbei Füllgrade von 50 bis 90 Gew.-%. Als Matrixmaterial werden handelsübliche Thermoplaste eingesetzt. Insbesondere sind hier Polyvinylchlorid, Polypropylen und die unterschiedlichen Typen Polyethylen zu nennen. Seltener werden auch technische Thermoplaste wie Polystyrol oder andere Styrolpolymere (z.B. ABS) verwendet. Neben den genannten Hauptbestandteilen werden in solchen Anwendungen auch einige Additive zur Optimierung der Eigenschaften eingesetzt. So werden in geringen Mengen modifizierte Polymere zur Verbesserung der mechanischen Eigenschaften zugegeben. Ungelöste Probleme sind bisher die schnelle Alterung dieser Werkstoffe unter Witterungseinflüssen und die schlechte Dimensionsstabilität durch die Wasseraufnahme des in den Kunststoff eingearbeiteten Holzes.

Überraschender Weise wurde gefunden, dass der Zusatz von Wachsen zu gefüllten Kunststoffen anwendungstechnische Vorteile liefert. Der Einsatz von entsprechenden Produkten beeinflusst das Eigenschaftsprofil der Formteile deutlich positiv. Es werden die mechanischen Kennwerte bei Zug- und Biegebeanspruchung angehoben.

Weiterhin wird die Wasseraufnahme von hydrophilen Füllstoffen retardiert und reduziert. Gleichzeitig wird eine verbesserte Dimensionsstabilität erreicht.

Die Erfindung betrifft daher die Verwendung von synthetischen oder natürlichen Wachsen zur Modifizierung der mechanischen Eigenschaften, der Wasserbeständigkeit und der Dimensionsstabilität von mit organischen Füllstoffen gefüllten Kunststoffen.

Bevorzugt handelt es sich bei den natürlichen Wachsen um Petroleumwachse, Montanwachse, tierische Wachse und/oder pflanzliche Wachse.

Bevorzugt handelt es sich bei den synthetischen Wachsen um Fettsäuren, Fettsäureester, Fettsäureamide, Fischer-Tropsch-Wachse, Polyolefinwachse und/oder polar modifizierte Polyolefinwachse.

Bevorzugt handelt es sich bei den natürlichen Wachsen um Montanwachse. Montanwachse sind Esterwachse und/oder Salze von Carbonsäuren. Es handelt sich insbesondere um Umsetzungsprodukte der Montanwachssäuren mit mehrwertigen niedermolekularen Alkoholen.

Bevorzugt handelt es bei den natürlichen Wachsen um beispielsweise Pflanzenwachse wie Carnauba- oder Candelillawachs oder Wachse tierischer Herkunft wie z.B. Schellackwachs in Frage. Geeignete teilsynthetische Wachse sind beispielsweise gebleichte, gegebenenfalls chemisch z.B. durch Veresterung und/oder durch partielle Verseifung modifizierte Montanwachse. Entsprechende Produkte sind beispielsweise in Ullmann's Encyclopedia of Industrial Chemistry, 5. Aufl., Vol. A 28, Weinheim 1996 in Kapitel 2.2, 2.3 und 3.1-3.5, S. 110 - 126 beschrieben.

Bevorzugt handelt es sich um polare oder unpolare vollsynthetische Wachse, z.B. Polyolefinwachse. Unpolare Polyolefinwachse können durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Frage, wobei die Olefine, in der Regel Ethylen, bei hohen Drucken und Temperaturen zu mehr oder minder verzweigten Wachsen umgesetzt werden; daneben Verfahren, bei denen Ethylen und/oder höhere 1-Olefine mit Hilfe metallorganischer Katalysatoren, beispielsweise Ziegler-Natta- oder Metallocenkatalysatoren zu unverzweigten oder verzweigten Wachsen polymerisiert werden. Entsprechende Methoden zur Herstellung von Olefin-Homo- und Copolymerwachsen sind beispielsweise in Ullmann's Encyclopedia of Industrial Chemistry, 5. Aufl., Vol. A 28, Weinheim 1996 in Kapitel 6.1.1 / 6.1.2-(Hochdruckpolymerisation), Kap. 6.1.3 . (Ziegler-Natta-Polymerisation, Polymerisation mit Metallocenkatalysatoren) sowie Kap. 6.1.4 (thermischer Abbau), S. 146-154 beschrieben. Polare Polyolefinwachse entstehen durch entsprechende Modifizierung von unpolaren Wachsen, z.B. durch Oxidation mit Luft oder durch Aufpfropfung polarer Olefinmonomere, beispielsweise α,β-ungesättigter Carbonsäuren und/oder deren Derivaten, etwa Acrylsäure oder Maleinsäureanhydrid und/oder subsituierte und/oder unsubstituierte Styrole und/oder Vinylsilanen. Ferner können polare Polyolefinwachse durch Copolymerisation von Ethylen mit polaren Comonomeren, beispielsweise Vinylacetat oder Acrylsäure hergestellt werden; weiterhin durch oxidativen Abbau von höhermolekularen, nicht wachsartigen Ethylen-Homo- und Copolymeren. Entsprechende Beispiele finden sich etwa in Ullmann's Encyclopedia of Industrial Chemistry, 5. Aufl., Vol. A 28, Weinheim 1996, Kap. 6.1.5, S. 155.

Bevorzugt handelt es sich bei den Polyolefinwachsen um Homo- und Copolymere verschiedener Alkene.

Bevorzugt handelt es sich bei den Polyolefinwachsen um Homo- und Copolymere des Ethens und Propens.

Bevorzugt handelt es sich bei den Polyolefinwachsen um Homo- und Copolymere hergestellt am Ziegler- oder Metallocene-Katalysatorkontakt.

Bevorzugt handelt es sich bei den Polyolefinwachsen um polar modifizierte Polyolefinwachse.

Bevorzugt handelt es sich bei den polar modifizierten Polyolefinwachsen um Oxidationsprodukte oder Pfropfcopolymere.

Bevorzugt handelt es sich bei den Pfropfcopolymeren um Produkte radikalisch hergestellt aus beschriebenen Polyolefinwachsen und einem oder mehreren polaren Monomeren.
Bevorzugt handelt es sich bei den Monomeren um Maleinsäureanhydrid, alkoxy-substituierte Vinylsilane und Styrolen.

Bevorzugt handelt es sich bei den Pfropfcopolymeren um Produkte mit einem Tropfpunkt von 90 bis 170°C.

Besonders bevorzugt handelt es sich bei den Pfropfcopolymeren um Produkte mit einem Tropfpunkt von 110 bis 150°C.

Bevorzugt handelt es sich bei den Pfropfcopolymeren um Produkte mit einer Schmelzviskosität bei 170°C von 0,1 bis 10000 mPas.

Besonders bevorzugt handelt es sich bei den Pfropfcopolymeren um Produkte mit einer Schmelzviskosität bei 170°C von 1 bis 1000 mPas.

Bevorzugt handelt es sich bei den Pfropfcopolymeren um Produkte mit einem Pfropfgrad von 0,1 bis 20 %.

Besonders bevorzugt handelt es sich bei den Pfropfcopolymeren um Produkte mit einem Pfropfgrad von 2 bis 10 %.

Bevorzugt werden die Wachse in einer Menge von 0,05 bis 10 Gew.-%, bezogen auf den Füllstoff, eingesetzt.

Besonders bevorzugt werden die Wachse in einer Menge von 0,5 bis 5,0 Gew.-%, bezogen auf den Füllstoff, eingesetzt.

Bevorzugt handelt es sich bei den Füllstoffen um organische Füllstoffe.

Bevorzugt handelt es sich bei den organischen Füllstoffen um Holz- und Korkmehl, Holzspäne, Holzfasern und Naturfasern.

Bevorzugt werden die Füllstoffe in einer Menge von 1 bis 99 Gew.-% bezogen auf die Gesamtmischung eingesetzt.

Besonders bevorzugt werden die Füllstoffe in einer Menge von 50 bis 90 Gew.-% bezogen auf die Gesamtmischung eingesetzt.

Die Erfindung betrifft auch einen thermoplastischen oder duroplastischen Kunststoff, enthaltend 1 bis 99 Gew.-% eines mit dem beschriebenen Wachs beschichteten Füllstoffes.

Bevorzugt handelt es sich um einen thermoplastischen oder duroplastischen Kunststoff, enthaltend 50 bis 95 Gew.-% eines mit Wachs beschichteten Füllstoffes.

Bevorzugt handelt es sich bei dem thermoplastischen, vulkanisierbaren (Gummi) oder duroplastischen Kunststoff um Polyvinylchlorid, Polyethylen-HD (Hoher Dichte), Polyethylen-LD (Niedriger Dichte), Polyethylen-LLD (linear und niedriger Dichte), Polypropylen, Naturkautschuk, Synthesekautschuk, Polycarbonat, Polymethylmethacrylat, Polyamid, Styrolpolymere und/oder auch Blends aus verschiedenen Kunststoffen.

Für das Einbringen des Wachses in die Mischung gibt es verschiedene Möglichkeiten: So kann das Wachs in einem bestehenden oder neuen Verfahrensschritt als wässrige Dispersion aufgetragen werden. Weiterhin gibt es die Möglichkeit, eine Wachsschmelze zu verdüsen und so auf den Füllstoff aufzubringen. Außerdem kann eine Mischung aus Füllstoff und Wachs in einem Mischaggregat (z.B. Flügelmischer) homogenisiert werden. Weiterhin ist es möglich das Wachs ohne weitere Vormischung direkt in die Verarbeitungsmaschine volumetrisch oder gravimetrisch zu dosieren und somit erst dort den Kontakt zwischen den einzelnen Komponenten herzustellen.

### Beispiele

Handelsübliche Holzspäne wurde mit unterschiedlichen Wachsen und einem handelsübliches Polyethylen-HD vorgemischt und anschließend wurde diese Mischung auf einem Extruder compoundiert. Die granulierten Compounds wurden mittels Spritzguss zu Formteilen verarbeitet. Diese Teile wurden diversen Untersuchungen unterzogen. In die Versuche wurde ein auf dem Markt gängiges Produkt als Vergleich einbezogen. Diese Rezepturen sind mit B gekennzeichnet und stellen den Stand der Technik dar.
Compound A enthält 70 Gew.-% Holzspäne und 30 Gew.-% PE-HD.
Compound B enthält 1,5 Gew.-% eines kommerziell erhältliche Additivs für das System Holz/Polyethylen und 70 Gew.-% Holzspäne und 28,5 Gew.-% PE-HD. Compound C enthält 1,5 Gew.-% eines Maleinsäureanhydrid gepfropften Metallocene-Polyethylenwachses als Additiv für das System Holz/Polyethylen und 70 Gew.-% Holzspäne und 28,5 Gew.-% PE-HD.

### Charakterisierung des neuartigen Additivs:

Polyethylenwachs hergestellt durch Metallocene-Katalyse

| | |
|---|---|
| Tropfpunkt: | ca. 120°C |
| Säurezahl: | ca. 40 mg KOH/g |
| Viskosität: | ca. 220 mPas bei 140°C |

Compoundherstellung: Alle pulverförmigen Bestandteile wurden in einem Taumelmischer homogen gemischt. Diese Mischung wurde mit einem Gleichdrall-Doppelschneckenextruder zu einem Granulat verarbeitet.

Prüfköperherstellung: Für alle Prüfungen wurden Normschulterstäbe nach DIN EN ISO 294 spritzgegossen.

Die mechanischen Eigenschaften wurden nach DIN EN ISO 178, DIN EN ISO 179 und DIN EN ISO 527 bestimmt. Die Untersuchung der Wasseraufnahme wurde nach DIN EN ISO 62 durchgeführt.

| | A | B | C |
|---|---|---|---|
| Zug-E-Modul [MPa] | 5730 | 5680 | 6880 |
| Zugfestigkeit [N/mm²] | 25,7 | 28,2 | 38,4 |
| Zugdehnung [%] | 0,7 | 0,7 | 0,8 |
| Schlagzähigkeit [kJ/m²] | 2,2 | 2,9 | 3,5 |
| Biegemodul [Mpa] | 4190 | 4070 | 4100 |
| Biegefestigkeit [N/mm²] | 24,4 | 29,7 | 40,3 |
| Biegedehnung [%] | 0,8 | 0,9 | 1,2 |
| Wasseraufnahme nach 20 Tagen [%] | 114 | 112 | 107 |
| Wasseraufnahme nach 50 Tagen [%] | 116 | 115 | 113 |

Die aufgelisteten Messwerte zeigen deutlich, dass das Compound C mit Abstand die besten Eigenschaften besitzt.

## Patentansprüche

1. Verwendung von synthetischen oder natürlichen Wachsen zur Modifizierung der mechanischen Eigenschaften, der Wasserbeständigkeit und der Dimensionsstabilität von mit organischen Füllstoffen gefüllten Kunststoffen.

2. Verwendung nach Anspruch 1, **dadurch gekennzeichnet, dass** es sich bei den natürlichen Wachsen um Petroleumwachse, Montanwachse, tierische Wachse und pflanzliche Wachse handelt.

3. Verwendung nach Anspruch 1, **dadurch gekennzeichnet, dass** es sich bei den synthetischen Wachsen um Fettsäuren, Fettsäureester, Fettsäureamide, Fischer-Tropsch-Wachse, Polyolefinwachse und polar modifizierte Polyolefinwachse handelt.

4. Verwendung nach Anspruch 1 oder 3, **dadurch gekennzeichnet, dass** es sich bei polar modifizierten Polyolefinwachsen um mit polaren Monomeren gepfropfte Polyolefinwachse handelt.

5. Verwendung nach Anspruch 4, **dadurch gekennzeichnet, dass** es sich um mit Maleinsäureanhydrid und/oder alkoxy-substituierte Vinylsilane und/oder Styrolen gepfropfte Polyolefinwachse handelt.

6. Verwendung nach einem oder nach mehreren der Ansprüche 1 bis 5, **dadurch gekennzeichnet, dass** es sich bei den organischen Füllstoffen um Holz- und Korkmehl, Holzspäne, Holzfasern und Naturfasern handelt.

7. Verwendung nach einem oder mehreren der Ansprüche 1 bis 6, **dadurch gekennzeichnet, dass** die Wachse in einer Menge von 0,05 bis 10 Gew.-%, bezogen auf den Füllstoff, eingesetzt werden.

8. Verwendung nach einem oder mehreren der Ansprüche 1 bis 7, **dadurch gekennzeichnet, dass** die Wachse in einer Menge von 0,5 bis 5,0 Gew.-%, bezogen auf den Füllstoff, eingesetzt werden.

9. Verwendung nach einem oder mehreren der Ansprüche 1 bis 8, **dadurch gekennzeichnet, dass** ein thermoplastischer oder duroplastischer Kunststoff, 1 bis 99 Gew.-% eines organischen Füllstoffes enthält.

10. Verwendung nach einem oder mehreren der Ansprüche 1 bis 9, **dadurch gekennzeichnet, dass** ein thermoplastischer oder duroplastischer Kunststoff, 50 bis 90 Gew.-% eines Füllstoffes enthält.

## Claims

1. The use of synthetic or natural waxes for modifying the mechanical properties, the water stability and the dimensional stability of plastics filled with organic fillers.

2. The use as claimed in claim 1, wherein the natural waxes comprise petroleum waxes, montan waxes, animal waxes, and vegetable waxes.

3. The use as claimed in claim 1, wherein the synthetic waxes comprise fatty acids, fatty acid esters, fatty acid amides, Fischer-Tropsch waxes, polyolefin waxes, and polar-modified polyolefin waxes.

4. The use as claimed in claim 1 or 3, wherein polar-modified polyolefin waxes comprise polyolefin waxes grafted using polar monomers.

5. The use as claimed in claim 4, wherein the materials comprise polyolefin waxes grafted using maleic anhydride and/or using alkoxy-substituted vinylsilanes and/or using styrenes.

6. The use as claimed in one or more of claims 1 to 5, wherein the organic fillers comprise wood flour and cork flour, wood particles, wood fibers, and natural fibers.

7. The use as claimed in one or more of claims 1 to 6, wherein the amount used of the waxes is from 0.05 to 10% by weight, based on the filler.

8. The use as claimed in one or more of claims 1 to 7, wherein the amount used of the waxes is from 0.5 to 5.0% by weight, based on the filler.

9. The use as claimed in one or more of claims 1 to 8, wherein a thermoplastic or thermoset comprises from 1 to 99% by weight of an organic filler.

10. The use as claimed in one or more of claims 1 to 9, wherein a thermoplastic or thermoset comprises from 50 to 90% by weight of a filler.

## Revendications

1. Utilisation de cires synthétiques ou naturelles pour la modification des propriétés mécaniques, de la résistance à l'eau et de la stabilité dimensionnelle de matières plastiques comportant des charges organiques.

2. Utilisation selon la revendication 1, **caractérisée en ce que** les cires naturelles sont des cires de pétrole, des cires de lignite, des cires animales et des cires végétales.

3. Utilisation selon la revendication 1, **caractérisée en ce que** les cires synthétiques sont des acides gras, des esters d'acides gras, des amides d'acides gras, des cires de Fischer-Tropsch, des cires de polyoléfine et des cires de polyoléfine modifiées par voie polaire.

4. Utilisation selon la revendication 1 ou 3, **caractérisée en ce que** les cires de polyoléfine modifiées par voie polaire sont des cires de polyoléfine greffées par des monomères polaires.

5. Utilisation selon la revendication 4, **caractérisée en ce qu'**il s'agit de cires de polyoléfine greffées par de l'anhydride maléique et/ou par des vinylsilanes à substitution alcoxy et/ou par des styrènes.

6. Utilisation selon une ou plusieurs des revendications 1 à 5, **caractérisée en ce que** les charges organiques sont de la farine de bois et de la farine de liège, des copeaux de bois, des fibres de bois et des fibres naturelles.

7. Utilisation selon une ou plusieurs des revendications 1 à 6, **caractérisée en ce que** les cires sont utilisées dans une quantité allant de 0,05 à 10 % en poids par rapport à la charge.

8. Utilisation selon une ou plusieurs des revendications 1 à 7, **caractérisée en ce que** les cires sont utilisées dans une quantité allant de 0,5 à 5,0 % en poids, par rapport à la charge.

9. Utilisation selon une ou plusieurs des revendications 1 à 8, **caractérisée en ce qu'**une matière thermoplastique ou duroplastique contient de 1 à 99 % en poids d'une charge organique.

10. Utilisation selon une ou plusieurs des revendications 1 à 9, **caractérisée en ce qu'**une matière thermoplastique ou duroplastique contient de 50 à 90 % en poids d'une charge.
